# EUROPÄISCHE PATENTSCHRIFT

(11) **EP 2 942 678 B1**
(45) Veröffentlichungstag und Bekanntmachung des Hinweises auf die Patenterteilung: **17.07.2019**
(21) Anmeldenummer: 14167501.7
(22) Anmeldetag: 08.05.2014
(51) Int. Cl.: G05B 19/042, G06F 3/0482, G06F 3/0484, G06F 16/22

(54) **Zuweisungsrevolver**
Allocating revolver
Tourelle d'attribution

(43) Veröffentlichungstag der Anmeldung: 11.11.2015
(73) Patentinhaber: dSPACE digital signal processing and control engineering GmbH, 33102 Paderborn (DE)
(72) Erfinder: Schulte, Sebastian, 33102 Paderborn (DE)

(56) Entgegenhaltungen:
- EP-A2- 2 541 354
- WO-A2-2005/020003
- US-A1- 2004 255 269
- US-A1- 2009 217 200
- Anonymous: "Getting Started with the LabVIEW Touch Panel Module for Windows CE", , 1. Januar 2006 (2006-01-01), Seiten 1-20, XP055159106, Gefunden im Internet: URL:http://www.ni.com/pdf/manuals/371940a. pdf [gefunden am 2014-12-17]

## Beschreibung

Die vorliegende Erfindung betrifft ein Verfahren zum Verbinden von einer Mehrzahl von Datenstrukturen einer Datenverarbeitungsanlage mit einer Mehrzahl von Elementen eines Mensch-Maschine-Interface (MMI) angegeben, wobei die Datenstrukturen Komponenten eines realen oder virtuellen Steuer- oder Regelsystems darstellen oder in Beziehung zu Komponenten eines realen oder virtuellen Steuer- oder Regelsystems stehen. Weiterhin betrifft die Erfindung eine Datenverarbeitungseinrichtung mit einem Mensch-Maschine-Interface (MMI) mit einer Mehrzahl von Elementen und einer Mehrzahl von Datenstrukturen, wobei die Datenstrukturen Komponenten eines realen oder virtuellen Steuer- oder Regelsystems darstellen oder in Beziehung zu Komponenten eines realen oder virtuellen Steuer- oder Regelsystems stehen, zur Durchführung des oben genannten Verfahrens. Die vorliegende Erfindung betrifft auch ein Computerprogrammprodukt mit Computer-implementierten Anweisungen, das nach dem Laden und Ausführen in einer geeigneten Datenverarbeitungseinrichtung die Schritte des obigen Verfahrens ausführt, sowie ein digitales Speichermedium mit elektronisch auslesbaren Steuersignalen angegeben, die so mit einer programmierbaren Datenverarbeitungseinrichtung zusammenwirken können, dass das obige Verfahren auf der Datenverarbeitungseinrichtung ausgeführt wird.

Beispielsweise im Bereich der modelbasierten Entwicklung von Regel- oder Steuerungssystemen kann es erforderlich sein, in den beschriebenen Modellen vorhandene Größen für einen Entwickler zur Laufzeit des Modells sichtbar zu machen oder auch manipulieren zu können. Zu diesem Zweck können virtuelle Anzeige- und/oder Bedienelemente verwendet werden, z.B. virtuelle analoge oder digitale Werteanzeigen, virtuelle Warnleuchten, virtuelle Schalter oder Eingabefelder für Werte. Diese Anzeige- und Bedienelemente werden auch als Instrumente bezeichnet.

Eine bekannte Anwendung im Bereich von Modellierungen eines Regel- oder Steuerungskreises ist beispielsweise das Produkt ControlDesk der Anmelderin. Dabei werden aus einem ausführbaren Modell, welches einen technischen oder physikalischen Prozess mathematisch nachbildet oder den Kontrollalgorithmus zu einem technischen Prozess darstellt, Variablen bereitgestellt. Die Variablen können also beispielsweise technische oder physikalische Größen wie z.B. Spannungen, Temperaturen oder auch technische bedingte Parameter wie Fehlermeldungen oder Timeout-Zeiten, repräsentieren. Eine andere bekannte Anwendung in diesem Bereich ist das Produkt ConfigurationDesk der Anmelderin. Darin werden Verbindungen von Elementen eines MMI in der Form von Steuergeräte-Ports mit Datenstrukturen in der Form von Modell-Schnittstellen hergestellt.

Das Verbinden von Elementen des MMI und den Datenstrukturen wird in der Regel in einem graphischen MMI per "drag&drop" erledigt, d.h. eine Datenstruktur wird beispielsweise mit einer Maus ausgewählt und auf ein Element des MMI gezogen, sodass das Element des MMI und die Datenstruktur verbunden werden können. Die Verknüpfung zwischen Variablen und Instrumenten kann somit sehr zeitaufwendig sein. Dies kann für das Verbinden einer einzelnen Datenstruktur mir einem einzelnen Element des MMI noch praktikabel sein, nicht jedoch wenn eine Vielzahl von Verbindungen herzustellen ist. Insbesondere im Bereich der modelbasierten Entwicklung von Regel- oder Steuerungssystemen kann es erforderlich sein, eine große Anzahl von Datenstrukturen, beispielsweise von Variablen, mit einer großen Anzahl von Elementen, beispielsweise von virtuellen Instrumenten, in einem MMI zu verbinden, um diese Variablen anzuzeigen oder manipulieren zu können. Dies kann einen enormen Zeitaufwand bedeuten.

Eine Möglichkeit, diesen Zeitaufwand zu verringern, besteht darin, die Verbindungen automatisiert zu erstellen, z.B. über gleiche Bezeichnungen. Dies ist jedoch nicht für alle Datenstrukturen bzw. Elemente des MMI möglich. Alternativen, wie z.B. das Anlegen eines Instruments für alle Variablen, sind wenig flexibel.

Bei kompliziert strukturierten Modell-Schnittstellen bzw. Steuergeräte-Ports, z.B. hierarchischen Strukturen, wie sie häufig bei Bussen, z.B. dem CAN-Bus im automotiven Bereich, vorkommen, kann die Zuordnung durch verschiedene Hierarchieebenen weiter erschwert werden. Eine automatische Zuordnung kann trotz Namensgleichheit somit wegen uneinheitlicher Hierarchieebenen auf beiden Seiten unter Umständen nicht möglich sein.

In diesem Kontext sind aus der US 2004/255269 A1 ein System und ein Verfahren zur Projektierung der Kommunikation zwischen einem grafischen Programmelement (GPE) und einem grafischen Benutzerschnittstellenelement (GUIE) bekannt. Das GPE und das GUIE stammen von jeweils verschiedenen graphischen Programmentwicklungsumgebungen. In Reaktion auf ein Empfangen einer Benutzereingabe betreffend das GPE und GUIE und eine Datenquelle/Datenziel-Assoziation zwischen ihnen wird mindestens eines des GUIE und des GPE programmgesteuert geändert, um die Kommunikation zwischen dem GPE und GUIE zu konfigurieren. Das graphische Programm wird dann ausgeführt, wobei entweder das GPE eine Funktion ausführt, um Daten zu generieren, um die Daten an das GUIE zu liefern oder das GUIE die empfangenen Daten zeigt. Alternativ empfängt das GUIE Element Daten von dem Benutzer, liefert die Daten an das GPE und das GPE empfängt die Daten und führt eine Funktion basierend auf den Daten aus. Die Benutzereingabe kann über eine Drag-and-Drop-Benutzeroberflächentechnik, über eine Linienzeichnung, über eine Kommandozeile, über ein Menü, über ein Dialogfeld oder über einen Assistenten usw. durchgeführt werden.

Weiterhin ist als Stand der Technik das Dokument "Getting Started with the LabVIEW Touch Panel Module for Windows CE", Version 8.2, 1. Januar 2006, Seiten 1-20, bekannt. Das LabVIEW Touch Panel Module erweitert die grafischen LabVIEW Entwicklungsumgebung auf Systemgeräte Touch, um Mensch-Maschine-Schnittstelle (HMI) Anwendungen für die Touch-Panel-Geräte basierend auf Windows CE zu erstellen.
In einem LabVIEW-Projekt wird ein Touch Panel Ziel für das bauen festgelegt, um eine Touch-Panel-Anwendung auf einem Touch-Panel-Gerät auszuführen.

Ausgehend von dem oben genannten Stand der Technik liegt der Erfindung somit die Aufgabe zugrunde, ein Verfahren, eine Datenverarbeitungseinrichtung, ein Computerprogrammprodukt sowie ein digitales Speichermedium mit elektronisch auslesbaren Steuersignalen der oben genannten Art anzugeben, welche ein einfaches Verbinden von Datenstrukturen und Elementen eines MMI in einer effizienten Weise ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Verbinden von einer Mehrzahl von Datenstrukturen einer Datenverarbeitungsanlage mit einer Mehrzahl von Elementen eines Mensch-Maschine-Interface (MMI) angegeben, wobei die Datenstrukturen Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, umfassend die Schritte Bereitstellen eines MMI mit einer Mehrzahl von Elementen, Anordnen der Mehrzahl von Datenstrukturen in einer Liste, wobei die Liste als verkettete Liste oder als Queue ausgeführt ist, Auswahl eines Elements des MMI durch einen Nutzer, Automatisches Verbinden einer ersten Datenstruktur aus der Liste mit dem ausgewählten Element des MMI, und Setzen des Listenanfangs auf die Datenstruktur, die in der Liste der zuvor verbundenen Datenstruktur folgt, wobei die Schritte der Auswahl eines Elements des MMI durch einen Nutzer, des automatischen Verbindens einer ersten Datenstruktur aus der Liste mit dem ausgewählten Element des MMI, des Setzens des Listenanfangs auf die Datenstruktur, die in der Liste der zuvor verbundenen Datenstruktur folgt, in dieser Reihenfolge wiederholt durchgeführt werden.
Erfindungsgemäß ist ebenfalls ein Verfahren zum Verbinden von einer Mehrzahl von Datenstrukturen einer Datenverarbeitungsanlage mit einer Mehrzahl von Elementen eines Mensch-Maschine-Interface (MMI) angegeben, wobei die Datenstrukturen Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, umfassend die Schritte Bereitstellen eines MMI mit einer Mehrzahl von Elementen, Anordnen der Mehrzahl von Elementen in einer Liste, wobei die Liste als verkettete Liste oder als Queue ausgeführt ist, Bereitstellen eines Ausgabeelements in dem MMI zur Darstellung wenigstens einer Teilmenge der Mehrzahl von Datenstrukturen, Auswahl einer Datenstruktur in dem Ausgabeelement durch einen Nutzer, automatisches Verbinden eines ersten Elements aus der Liste mit der ausgewählten Datenstruktur, und Setzen des Listenanfangs auf das Element des MMI, das in der Liste dem zuvor verbundenen Element folgt, wobei die Schritte der Auswahl einer Datenstruktur in dem Ausgabeelement durch einen Nutzer, des automatischen Verbindens eines ersten Elements aus der Liste mit der ausgewählten Datenstruktur, und des Setzens des Listenanfangs auf das Element des MMI, das in der Liste dem zuvor verbundenen Element folgt, in dieser Reihenfolge wiederholt durchgeführt werden.

Erfindungsgemäß ist weiterhin eine Datenverarbeitungseinrichtung mit einem Mensch-Maschine-Interface (MMI) mit einer Mehrzahl von Elementen und einer Mehrzahl von Datenstrukturen, wobei die Datenstrukturen Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, zur Durchführung des oben genannten Verfahrens angegeben.

Erfindungsgemäß ist auch ein Computerprogrammprodukt mit Computer-implementierten Anweisungen, das nach dem Laden und Ausführen in einer geeigneten Datenverarbeitungseinrichtung die Schritte des obigen Verfahrens ausführt, angegeben.
Weiterhin ist erfindungsgemäß ein digitales Speichermedium mit elektronisch auslesbaren Steuersignalen angegeben, die so mit einer programmierbaren Datenverarbeitungseinrichtung zusammenwirken können, dass das obige Verfahren auf der Datenverarbeitungseinrichtung ausgeführt wird.

Grundidee der vorliegenden Erfindung ist es also, das Verbinden von Datenstrukturen und Elementen des MMI dadurch zu erleichtern, dass die Datenstrukturen in der Liste angeordnet sind, und automatisch aus der Liste einem ausgewählten Element des MMI zugeordnet und mit diesem verbunden werden können. Dadurch wird das Verbinden von Datenstrukturen und Elementen des MMI gegenüber dem bisherigen Verfahren beschleunigt, da nicht für jede Verbindung jeweils zuerst eine Variable und anschließend ein Element des MMI ausgewählt werden müssen, sondern dass alle zu verbindenden Datenstrukturen aus der Liste ihrer Reihenfolge in der Liste entsprechend mit jeweils einer einzelnen Aktion, z.B. einem Mausklick, mit einem Element des MMI verbunden werden können. Dieses Verfahren ist flexibel verglichen mit einer automatisierten Zuordnung von Datenstrukturen und Elementen des MMI und gleichzeitig gegenüber einem im Stand der Technik üblichen Verfahren nach den Prinzipien von "Drag&Drop".

Das MMI kann beispielsweise einen Bildschirm zur Ausgabe von Informationen sowie ein Eingabegerät nach der Art eines Zeigegeräts, beispielsweise eine Maus, aufweisen, um über den Bildschirm Informationen einzugeben. Prinzipiell ist dabei jede Art von Ein- und Ausgabegeräten verwendbar, beispielsweise akustische oder optische Ausgabegeräte, sowie Eingabegeräte zur optischen Eingabe, zur Sprachsteuerung oder zur Gestensteuerung.

Die Liste kann auf unterschiedliche Weise implementiert sein, wobei der Zugriff auf das jeweils erste Element relevant ist. Beispielsweise kann die Liste als Queue implementiert sein. Auch kann die Liste derart ausgeführt sein, dass einzelne Listenelemente in ihrer Reihenfolge in der Liste gespeichert sind. Alternativ können die Listenelemente unabhängig von Ihrer Reihenfolge in der Liste enthalten sein, wobei sich die Reihenfolge der Listenelemente über Verknüpfungen der einzelnen Listenelemente oder über Listenzeiger ergibt.

Die Datenstrukturen repräsentieren Teile von technischen Systemen, beispielsweise Variablen, Parameter, Schnittstellen, Ports, Modelle, intelligente Sensoren oder Kommunikationspartner.

Die Elemente des MMI können als virtuelle Konfigurationselemente, z.B. graphische Repräsentation von Ports oder Schnittstellen, als virtuelle Bedienelemente, beispielsweise virtuelle Schalter, Schiebe- oder Drehregler, sowie als virtuelle Anzeigeelemente, beispielsweise virtuelle Signalleuchte, Werteanzeige oder Plotter, ausgeführt sein. Entsprechend können die Elemente des MMI eine Aus- und/oder Eingabefunktion für die Datenstruktur aufweisen.

Das Verbinden des ersten Listenelements mit dem ausgewählten Element des MMI kann dabei erfolgen, ohne die Datenstruktur aus der Liste logisch oder physikalisch zu entfernen. Somit kann auch eine mehrfache Zuweisung einer Datenstruktur zu verschiedenen Elementen des MMI erfolgen. Beispielsweise können bereits verbundene Datenstrukturen erneut verbunden werden.

Quellen von Datenstrukturen und Elementen des MMI können ausgehend von den zuvor beschriebenen unterschiedlichen Ausgestaltungsmöglichkeiten der Datenstrukturen und der Elemente des MMI unterschiedlich sein. Beispielsweise kann ein getrenntes Modellierungs- und Instrumentalisierungsprogramm oder ein getrenntes Hardwarekonfigurations- und Instrumentalisierungsprogramm als Quellen verwendet werden.

Die Datenverarbeitungseinrichtung kann eine einzelne Datenverarbeitungsanalage, beispielsweise einen Computer, umfassen, oder als verteilte Datenverarbeitungseinrichtung mit einer Mehrzahl Datenverarbeitungsanalagen, beispielsweise verteilt angeordnet und über eine Netzwerkverbindung, beispielsweise eine Internetverbindung, miteinander verbunden sind.

Vorzugsweise umfasst das MMI einen Browser, insbesondere einen Web-Browser, in dem das Verfahren graphisch durchgeführt werden kann. Der Browser kann auf einfache Weise genutzt werden, um Elemente des MMI darzustellen. Durch die einfache Anbindung an ein Netzwerk können Informationen einzelner Datenverarbeitungsanalagen auf einfache Weise gemeinsam verarbeitet werden.

Die Auswahl eines Elements des MMI durch einen Nutzer erfolgt vorzugsweise durch eine Betätigung durch den Nutzer in dem MMI. Die Betätigung kann prinzipiell auf unterschiedliche Arten erfolgen. Die Betätigung kann beispielsweise eine Eingabe über das MMI sein. Alternativ kann auch eine Auswahl, die über einen vorgegebenen Zeitraum nicht verändert wird, als Betätigung für das Verbinden der ersten Datenstruktur aus der Liste mit dem Element des MMI interpretiert werden.

Die vorgenannten Prinzipien für das Verfahren des Verbindens von Datenstrukturen und Elementen des MMI betreffen entsprechend die Ausgestaltung des Verfahrens mit der Anordnung der Datenstrukturen in der Liste. Alternativ ist es auch möglich, die Elemente des MMI in einer Liste anzuordnen. Die obigen wie auch die nachstehenden Ausführungen zu dem Verfahren mit der Anordnung der Datenstrukturen in der Liste gelten sinngemäß für das Verfahren mit der Anordnung der Elemente des MMI in der Liste.

In vorteilhafter Ausgestaltung der Erfindung umfasst das Verfahren den zusätzlichen Schritt des Beendens des Verfahrens beim Erreichen des Endes der Liste der Datenstrukturen oder sobald jedem Element des MMI eine Datenstruktur zugewiesen ist. Es kann also ein Verbindung aller verfügbaren Datenstrukturen mit Elementen des MMI erfolgen, bzw. eine Verbindung von allen Elementen des MMI mit Datenstrukturen.

In vorteilhafter Ausgestaltung der Erfindung umfasst der Schritt des Setzens des Listenanfangs auf die Datenstruktur, die in der Liste der zuvor verbundenen Datenstruktur folgt, das Entfernen der zuvor verbundenen Datenstruktur aus der Liste. Entsprechend kann die Datenstruktur entfernt werden, um wenig Ressourcen zu allokieren bzw. um allokierte Ressourcen wieder fei zu geben. Alternativ kann ein logisches Löschen erfolgen, indem lediglich Verknüpfungen der Liste verändert werden, ohne die Elemente der Liste selber zu verändern. Dabei kann beispielsweise das Anzeigen einer Datenstruktur, die logisch gelöscht ist, unterdrückt werden. Alternativ oder zusätzlich kann eine logisch gelöschte Datenstruktur in einer Anzeige des MMI entsprechend markiert dargestellt werden. Beispielsweise können bereits verbundene Datenstrukturen in einer optischen Darstellung der Liste farblich markiert dargestellt werden, z.B. durch Ausgrauen oder Ähnliches.

In vorteilhafter Ausgestaltung der Erfindung umfasst das Verfahren den zusätzlichen Schritt des Navigierens in der Liste der Datenstrukturen. So kann beispielsweise vorgesehen sein, dass Datenstrukturen in der Liste übersprungen werden, um sie mit einem Element des MMI zu verbinden. Dies kann beispielsweise dadurch erfolgen, dass der Anfang der Liste auf ein nachfolgendes Listenelement gesetzt wird.

In vorteilhafter Ausgestaltung der Erfindung umfasst das MMI ein Ausgabeelement zur Darstellung wenigstens einer Datenstruktur, und das Verfahren umfasst den zusätzlichen Schritt des Darstellens wenigstens der Datenstruktur, auf die der Listenanfang gesetzt ist, in dem Ausgabeelement. Somit kann über das MMI unmittelbar erkannt werden, welche Datenstruktur der Liste als nächste zu verbinden ist. Durch die Darstellung wenigstens der Datenstruktur, auf die der Listenanfang gesetzt ist, kann ein Nutzer die Datenstruktur vor dem Verbinden erkennen und entsprechend das Verbinden auf einfache Weise und effizient durchführen. Wenn eine Mehrzahl von Datenstrukturen am Anfang der Liste dargestellt wird, kann eine weiter verbesserte Übersicht für einen Nutzer erreicht werden.

In vorteilhafter Ausgestaltung der Erfindung weist das MMI ein graphisches Auswahlmittel, insbesondere einen Zeiger, auf, welches zwischen den Elementen des MMI beweglich ist, und die Auswahl eines Elements des MMI durch einen Nutzer umfasst das Bewegen des Auswahlmittels zu dem auszuwählenden Element des MMI und das Bestätigen der Auswahl. Mit dem Auswahlmittel kann optisch eine Auswahl des Elements des MMI erfolgen, indem das Auswahlmittel zur Auswahl des Elements des MMI verwendet wird. Das Auswahlmittel ist vorzugsweise nach der Art eines Zeigers, beispielsweise eines Mauszeigers, ausgeführt. Alternativ kann das Auswahlmittel auch eine Markierung eines aktuell gewählten Elements des MMI sein, beispielsweise nach der Art eines beweglichen Rahmens. Weiter bevorzugt kann vorgesehen sein, dass der Nutzer nach der Auswahl des Elements des MMI eine Aktion durchführt, um die Auswahl zu bestätigen und das ausgewählte Element des MMI mit der ersten Datenstruktur der Liste zu verbinden. Die Aktion kann beispielsweise eine Eingabe über das MMI sein. Alternativ kann auch eine Auswahl, die über einen vorgegebenen Zeitraum nicht verändert wird, beispielsweise wenn der Mauszeiger für den vorgegebenen Zeitraum auf dem Element des MMI ruht, als Aktion zur Bestätigung des Verbindens der ersten Datenstruktur aus der Liste mit dem ausgewählten Element des MMI interpretiert werden.

In vorteilhafter Ausgestaltung der Erfindung umfasst das MMI eine dem graphischen Auswahlmittel zugeordnete Ausgabeeinheit zur Darstellung wenigstens einer Datenstruktur, wobei die Ausgabeeinheit mit dem graphischen Auswahlmittel beweglich ist, und das Verfahren umfasst den zusätzlichen Schritt des Darstellens wenigstens der Datenstruktur, auf die der Listenanfang gesetzt ist, in der Ausgabeeinheit. Mit der Darstellung in der Ausgabeeinheit kann einem Nutzer unmittelbar im Zusammenhang mit der Auswahl des zu verbindenden Elements des MMI wenigstens die Datenstruktur, auf die der Listenanfang gesetzt ist, angezeigt werden, so dass der Nutzer unmittelbar sieht, welche Datenstruktur bei einer Auswahl verbunden wird. Im Übrigen gelten die obigen Ausführungen in Bezug auf die Darstellung wenigsten einer Datenstruktur in dem Ausgabeelement. Vorzugsweise ist die Ausgabeeinheit nach der Art eines Tooltips ausgeführt.

In vorteilhafter Ausgestaltung der Erfindung umfasst der Schritt des Anordnens der Mehrzahl von Datenstrukturen in einer Liste das Sortieren von Datenstrukturen in der Liste. Durch die Sortierung der Liste können Elemente der Liste mit einer großen Wichtigkeit und/oder häufigen Verwendung am Listenanfang positioniert werden, so dass einfach auf sie zugegriffen werden kann. So kann beispielsweise das Verbinden von Datenstrukturen mit Elementen des MMI beendet werden, wenn alle Datenstrukturen mit einer hohen Priorität zu Elementen des MMI zugeordnet sind, ohne dass zeitaufwendig alle Datenstrukturen der Liste, die sich in der Liste vor der Datenstruktur mit einer hohen Priorität befinden, verbunden werden müssen. Die Reihenfolge der Datenstrukturen in der Liste kann beispielsweise durch den Nutzer manuell festgelegt werden. So kann der Nutzer durch verschieben/priorisieren der einzelnen Elemente der Liste deren Sortierung verändern. Dabei ist es prinzipiell möglich, die Liste nur teilweise zu sortieren, und einen Teil unsortiert zu belassen. Beispielsweise kann eine vorgegebene Anzahl Datenstrukturen, beispielsweise die zehn oder hundert wichtigsten Datenstrukturen, am Listenanfang angeordnet werden, und der Rest der Liste bleibt ungeordnet.

In vorteilhafter Ausgestaltung der Erfindung umfasst der Schritt des Sortierens von Datenstrukturen in der Liste das Bestimmen von wenigstens einem Sortierkriterium zum Sortieren der Datenstrukturen in der Liste und das automatische Sortieren der Datenstrukturen in der Liste gemäß des wenigstens einen Sortierkriteriums. Somit kann das Sortieren automatisch erfolgen, vorzugsweise unmittelbar von der Datenverarbeitungseinrichtung. Alternativ kann auch eine andere Recheneinheit zum automatischen Sortieren der Liste verwendet werden. Beispiele für ein Sortierkriterium sind bei Datenstrukturen, die Variablen sind, alphanumerische Zeichenfolgen bezogen auf den Namen oder einen Beschreibungstext der Variablen, ein Variablentyp (Int8, Int16, float32, bool, ...), eine Aktualisierungsrate (Sampletime) der Variablen oder ein Funktionsblock, dem die jeweilige Datenstruktur zugeordnet ist. Bei einer Modellierung eines Regel- oder Steuerungskreises kann ein Funktionsblock beispielsweise eine Modellkomponente sein. Bei Schnittstellen kann ein Sortierkriterium z.B. der Name, die Beschreibung oder eine Hierarchie der Schnittstellen innerhalb von Komponenten sein. Die Hierarchie kann beispielsweise ein Modell oder eine Hardware eines Regel- oder Steuerungskreises, in den die Schnittstellen vorliegen, betreffen. Das Sortieren der Datenstrukturen in der Liste kann auch unter Verwendung von einer Mehrzahl von Sortierkriterien erfolgen, indem die Sortierkriterien nacheinander angewendet werden.

In vorteilhafter Ausgestaltung der Erfindung umfasst das Verfahren den zusätzlichen Schritt des Auswählens der Mehrzahl von Datenstrukturen der Datenverarbeitungsanlage aus einer Gesamtheit von verfügbaren Datenstrukturen der Datenverarbeitungsanlage. Durch die Auswahl der Datenstrukturen können solche Datenstrukturen aus der Gesamtheit der verfügbaren Datenstrukturen ausgewählt werden, die von besonderer Wichtigkeit sind und/oder häufig verwendet werden. Die Auswahl der Datenstrukturen kann beispielsweise durch den Nutzer manuell durchgeführt werden. Beispielsweise kann eine vorgegebene Anzahl Datenstrukturen, beispielsweise die zwanzig oder zweihundert wichtigsten Datenstrukturen, aus der Gesamtheit der Datenstrukturen ausgewählt und in die Liste übernommen werden. Der Rest der Datenstrukturen bleibt in diesem Fall unberücksichtigt. Dies erleichtert die Verwendung der Liste, da sie durch die vorhergehende Auswahl Datenstrukturen übersichtlich bleibt.

In vorteilhafter Ausgestaltung der Erfindung umfasst der Schritt des Auswählens der Mehrzahl von Datenstrukturen der Datenverarbeitungsanlage aus einer Gesamtheit von verfügbaren Datenstrukturen das Bestimmen von wenigstens einem Filterkriterium zum Auswählen der Mehrzahl von Datenstrukturen und das automatische Auswählen der Mehrzahl von Datenstrukturen aus der Gesamtheit von verfügbaren Datenstrukturen gemäß des wenigstens einen Filterkriteriums. Somit kann das Auswählen der Datenstrukturen automatisch erfolgen, vorzugsweise unmittelbar von der Datenverarbeitungseinrichtung. Alternativ kann auch eine andere Recheneinheit zum automatischen Auswählen der Datenstrukturen verwendet werden. Beispiele für ein Filterkriterium sind bei Datenstrukturen, die Variablen sind, alphanumerische Reihenfolgen bezogen auf den Namen oder einen Beschreibungstext der Variablen, ein Variablentyp (Int8, Int16, float32, bool, ...), eine Aktualisierungsrate (Sampletime) der Variablen oder ein Funktionsblock, dem die jeweilige Datenstruktur zugeordnet ist. Bei einer Modellierung eines Regel- oder Steuerungskreises kann ein Funktionsblock beispielsweise eine Modellkomponente sein. Bei Schnittstellen kann ein Filterkriterium z.B. der Name, die Beschreibung oder eine Hierarchie der Schnittstellen innerhalb von Komponenten sein. Die Hierarchie kann beispielsweise ein Modell oder eine Hardware eines Regel- oder Steuerungskreises, in den die Schnittstellen vorliegen, betreffen. Das Auswählen der Datenstrukturen aus der Gesamtheit der Datenstrukturen kann auch unter Verwendung von einer Mehrzahl von Filterkriterien erfolgen, indem die Filterkriterien nacheinander angewendet werden.

In vorteilhafter Ausgestaltung der Erfindung umfasst das Verfahren den zusätzlichen Schritt des Ausgebens eines Inhaltes einer Datenstruktur in dem verbundenen Element des MMI. Die Ausgabe erfolgt abhängig von der Art des Elements, beispielsweise als eine Darstellung einer Variablen, zur Laufzeit des Modells des Regel- oder Steuerungskreises, zu dem die Datenstruktur gehört.

In vorteilhafter Ausgestaltung der Erfindung weist das MMI einen Touchscreen zur Darstellung und Auswahl der Elemente des MMI auf. Bei einem Touchscreen erfolgt üblicherweise eine Bedienung über die Oberfläche eines Bildschirms. Entsprechend lassen sich bei der Bedienung über den Touchscreen bestimmte Bedienverfahren, die beispielsweise aus der Bedienung von elektronischen Systemen mittels Maus und Tastatur bekannt sind, nicht oder nur schlecht übertragen. Beispielsweise ist das Verbinden von Elementen des MMI mit den Datenstrukturen in Software zu Modellierung technischer Systeme per "Drag&Drop", wie im Stand der Technik bekannt, mittels einer Bedienung über Touchscreen mit Problemen verbunden. Prinzipiell können zwar Elemente, wie bei "Drag&Drop" mit der Maus üblich, hier mit dem Finger "aufgenommen" und bewegt werden, jedoch sind fehlerhafte Zuweisungen durch unbeabsichtigten Verlust des Kontaktes zur Oberfläche des Touchscreens häufiger als bei vergleichbaren Bedienungen mit der Maus oder vergleichbaren Zeigemitteln. Außerdem kann ein Bildschirmausschnitt der Anwendung bei aufgenommener Datenstruktur bei einem Touchscreen nur schwer verschoben werden, was bei großen technischen Systemen mit vielen Elementen jedoch häufig erforderlich ist. Indem das Verbinden von Datenstrukturen und Elementen des MMI ohne das Auswählen der Datenstrukturen erfolgt, da diese bereits aus der Liste automatisch bereitgestellt werden, wobei das erste Element aus der Liste bereits vorausgewählt ist, wird die Möglichkeit von Fehlbedienungen reduziert. Somit ist das Verbinden des jeweils ersten Elementes der Liste zu einem auf dem Bildschirm repräsentierten Elements des MMI einfach mittels Bedienung über Touchscreen möglich, selbst wenn hierfür der Bildschirmausschnitt zunächst verschoben werden muss. Eine mögliche Auswahl von Datenstrukturen oder das Sortieren der Datenstrukturen in der Listen kann separat durchgeführt werden, wobei prinzipiell die gleichen Prinzipien zur Bedienung anwendbar sind, um auch diese Schritte einfach mittels Bedienung über Touchscreen durchführen zu können.

Nachfolgend wird die Erfindung unter Bezugnahme auf die anliegende Zeichnung anhand bevorzugter Ausführungsformen näher erläutert.

Es zeigen
- Fig. 1: ein Ablaufdiagram zur Durchführung eines Verfahrens zum Verbinden von einer Mehrzahl von Datenstrukturen einer Datenverarbeitungsanlage mit einer Mehrzahl von Elementen eines Mensch-Maschine-Interface (MMI) gemäß einer ersten Ausführungsform,
- Fig. 2: eine schematische Darstellung einer graphischen Ausgabe des MMI gemäß der ersten Ausführungsform, und
- Fig. 3: ein Ablaufdiagram zur Durchführung eines Verfahrens zum Verbinden von einer Mehrzahl von Datenstrukturen einer Datenverarbeitungsanlage mit einer Mehrzahl von Elementen eines Mensch-Maschine-Interface (MMI) gemäß einer zweiten Ausführungsform.

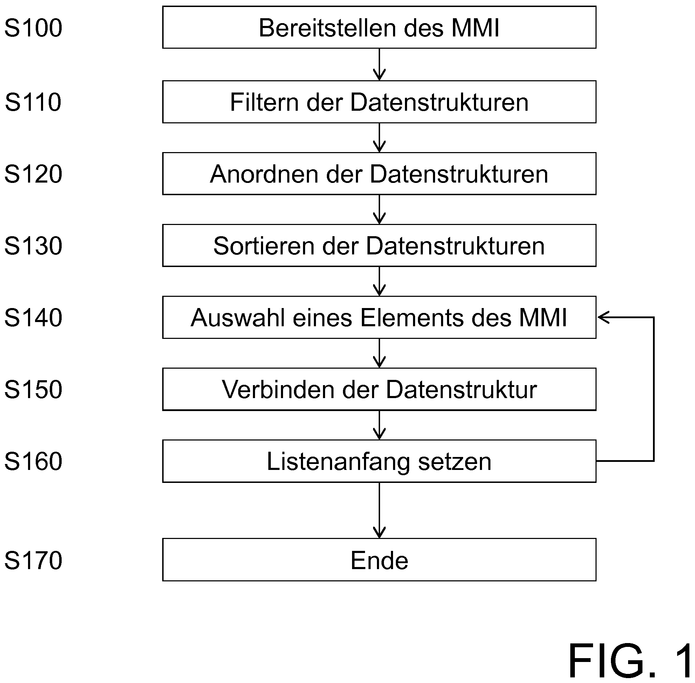

Die Figur 1 zeigt ein Ablaufdiagram eines erfindungsgemäßen Verfahrens zum Verbinden von einer Mehrzahl von Datenstrukturen einer Datenverarbeitungsanlage mit einer Mehrzahl von Elementen eines Mensch-Maschine-Interface (MMI) gemäß einer ersten Ausführungsform.

Die Datenverarbeitungsanlage ist in diesem Ausführungsbeispiel ein einzelner Computer, der mit einem Touchscreen als Anzeigevorrichtung und als Eingabevorrichtung ausgeführt ist. Bei dem Touchscreen erfolgt eine Bedienung über die Oberfläche eines Bildschirms.

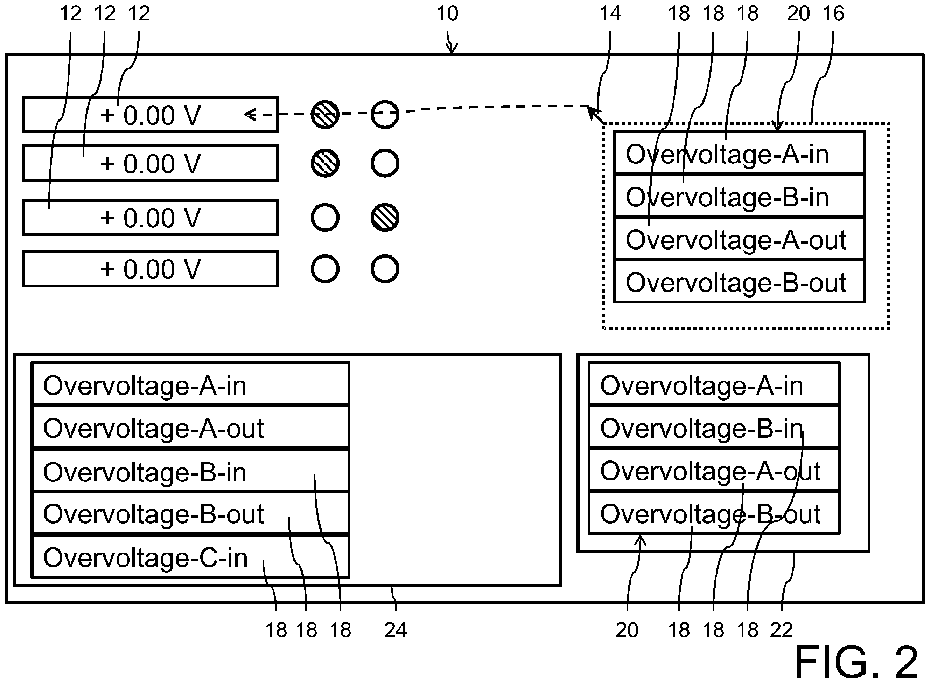

Auf dem Touchscreen ist als Teil des MMI ein Browserfenster 10 dargestellt, in dem das Verfahren graphisch durchgeführt wird, wie in Fig. 2 dargestellt In dem Browser 10 sind eine Mehrzahl Elemente 12 des MMI dargestellt. In dem Browserfenster 10 ist als graphisches Auswahlmittel 14 ein Zeiger dargestellt, der in dem Browser 10 beweglich ist. In einer Ausgabeeinheit 16, die in dem vorliegenden Ausführungsbeispiel als Tooltip ausgeführt ist und dem Auswahlmittel 14 zugeordnet und mit diesem beweglich ist, sind Datenstrukturen 18 dargestellt, die Teil einer Liste 20 sind, wie im nachstehend erläutert wird. Außerdem ist in dem Browserfenster 10 ein Ausgabeelement 22 dargestellt, in dem ebenfalls Datenstrukturen 18 der Liste 20 dargestellt sind.

Die Datenstrukturen 18 sind Komponenten eines realen oder virtuellen Steuer-, Regel- oder mechatronischen Systems oder Verknüpfungen zu Komponenten eines realen oder virtuellen Steuer-, Regel- oder mechatronischen Systems. Sie repräsentieren Teile von technischen Systemen, beispielsweise Variablen, Parameter, Schnittstellen, Ports, Modelle, intelligente Sensoren oder Kommunikationspartner.

Die Elemente 12 des MMI sind hier als virtuelle Konfigurationselemente, z.B. graphische Repräsentation von Ports oder Schnittstellen, als virtuelle Bedienelemente, beispielsweise virtuelle Schalter, Schiebe- oder Drehregler, sowie als virtuelle Anzeigeelemente, beispielsweise virtuelle Signalleuchte, Werteanzeige oder Plotter, ausgeführt. Entsprechend weise sie eine Aus- und/oder Eingabefunktion für die Datenstruktur auf.

Quellen der Datenstrukturen 18 und Elemente 12 des MMI sind dabei getrennte Modellierungs- und Instrumentalisierungsprogramms bzw. getrennte Hardwarekonfigurations- und Instrumentalisierungsprogramme.

Das Verfahren, das in Fig. 1 dargestellt ist, beginnt in Schritt S100. Gemäß Schritt S100 wird das MMI mit einer Mehrzahl von Elementen 12 bereitgestellt.

In Schritt S110 werden aus einer Gesamtheit von verfügbaren Datenstrukturen 18 der Datenverarbeitungsanlage, die wie in Fig. 2 dargestellt in einem Datenstrukturanzeigeelement 24 angezeigt werden, eine Mehrzahl von Datenstrukturen 18 ausgewählt. Dazu wird von dem Nutzer wenigstens ein Filterkriterium zum Auswählen der Mehrzahl von Datenstrukturen 18 bestimmt und das Auswählen der Mehrzahl von Datenstrukturen 18 aus der Gesamtheit von verfügbaren Datenstrukturen 18 erfolgt automatisch gemäß des wenigstens einen Filterkriteriums. Beispiele für ein Filterkriterium sind bei Datenstrukturen 18, die Variablen sind, alphanumerische Zeichenfolgen bezogen auf den Namen oder einen Beschreibungstext der Variablen, ein Variablentyp (Int8, Int16, float32, bool, ...), eine Aktualisierungsrate (Sampletime) der Variablen oder ein Funktionsblock, dem die jeweilige Datenstruktur zugeordnet ist. Bei Datenstrukturen 18 als Schnittstellen kann ein Filterkriterium z.B. der Name, die Beschreibung oder eine Hierarchie der Schnittstellen innerhalb von Komponenten sein. Die Hierarchie kann beispielsweise ein Modell oder eine Hardware eines Regel- oder Steuerungskreises, in den die Schnittstellen vorliegen, betreffen. Das Auswählen der Datenstrukturen 18 aus der Gesamtheit der Datenstrukturen 18 wird unter Verwendung aller ausgewählten Filterkriterien durchgeführt, wobei die Filterkriterien entsprechend ihrer Auswahl nacheinander angewendet werden.

In Schritt S120 werden die zuvor ausgewählten Datenstrukturen 18 in der Liste 20 angeordnet. Die Liste 20 ist hier beispielsweise als verkettete Liste implementiert, bei der Listenelemente jeweils auf nachfolgenden Listenelement zeigen.

In Schritt S130 werden die Datenstrukturen 18 in der Liste 20 sortiert. Dazu wird wenigstens ein Sortierkriterium ausgewählt und die Datenstrukturen 18 in der Liste 20 werden gemäß des wenigstens einen Sortierkriteriums automatisch sortiert. Sortierkriterien in diesem Ausführungsbeispiel sind für Datenstrukturen 18, die Variablen sind, alphanumerische Reihenfolgen bezogen auf den Namen oder einen Beschreibungstext der Variablen, ein Variablentyp (Int8, Int16, float32, bool, ...), eine Aktualisierungsrate (Sampletime) der Variablen oder ein Funktionsblock, dem die jeweilige Datenstruktur zugeordnet ist. Bei Schnittstellen als Datenstrukturen 18 kann ein Sortierkriterium z.B. der Name, die Beschreibung oder eine Hierarchie der Schnittstellen innerhalb von Komponenten sein. Die Hierarchie kann beispielsweise ein Modell oder eine Hardware eines Regel- oder Steuerungskreises, in den die Schnittstellen vorliegen, betreffen. Das Sortieren der Datenstrukturen 18 in der Liste 20 wird unter Verwendung aller ausgewählten Sortierkriterien durchgeführt, wobei die Sortierkriterien entsprechend ihrer Auswahl nacheinander angewendet werden. Sortieralgorithmen als solche sind in der Technik bekannt.

In Schritt S140 erfolgt eine Auswahl eines Elements 12 des MMI durch einen Nutzer. Dazu wird das Auswahlmittel 14 durch eine Fingerbewegung auf dem Touchscreen auf das auszuwählende Element 12 bewegt, beispielsweise durch drücken auf das auszuwählende Element 12 oder durch ziehen des Auswahlmittels 14 zu dem auszuwählenden Element 12. Dabei wird die Ausgabeeinheit 16 mit dem graphischen Auswahlmittel 14 bewegt. In der Ausgabeeinheit 16 und dem Ausgabeelement 22 werden dabei die ersten Datenstrukturen 18 der Liste 20 dargestellt, d.h. die Datenstruktur 18, auf die der Listenanfang gesetzt ist, sowie nachfolgende Datenstrukturen 18.

Die Auswahl des Elements 12 des MMI wird von dem Nutzer durch eine Aktion aktiv bestätigt, indem über den Touchscreen eine Bestätigung erfolgt, beispielsweise durch ein erneutes Drücken auf das auszuwählende Element 12.

In Schritt S150 erfolgt ein automatisches Verbinden der ersten Datenstruktur 18 aus der Liste 20 mit dem ausgewählten Element 12 des MMI.

In Schritt S160 wird der Listenanfang auf die Datenstruktur 18 gesetzt, die in der Liste 20 der zuvor verbundenen Datenstruktur 18 folgt. Entsprechend wird die Ausgabe in der Ausgabeeinheit 16 und dem Ausgabeelement 22 aktualisiert. Dabei wird die zuvor verbundene Datenstruktur 18 aus der Liste 20 entfernt. Alternativ wird lediglich das Anzeigen der entfernten Datenstruktur unterdrückt.

Soweit noch Datenstrukturen 18 und Elemente 12 des MMI verfügbar sin, wird das Verfahren mit Schritt S140 fortgesetzt.

In Schritt S170 wird das Verfahren beim Erreichen des Endes der Liste 20 der Datenstrukturen 18 oder sobald jedes Element 12 des MMI mit einer Datenstruktur 18 verbunden ist beendet.

Wenn das Verfahren zur Laufzeit des Modells durchgeführt wird, erfolgt zusätzlich nach dem Verbinden von Datenstruktur 18 und Element 12 des MMI eine Ausgabe eines Inhaltes der jeweiligen Datenstruktur 18 in dem verbundenen Element 12 des MMI. Die Ausgabe erfolgt abhängig von der Art des Elements beispielsweise als Darstellung einer Variablen.

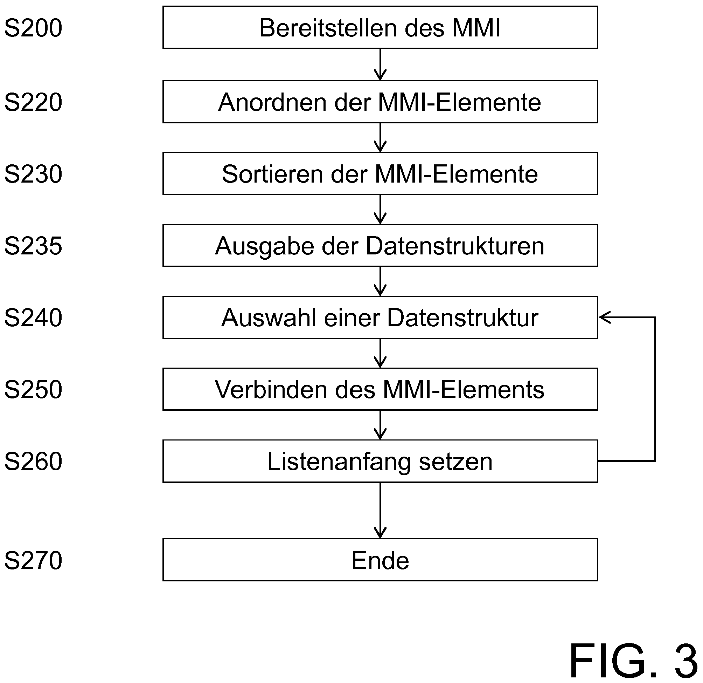

Unter Bezug auf Fig. 3 wir nachfolgend ein Verfahren zum Verbinden von einer Mehrzahl von Datenstrukturen einer Datenverarbeitungsanlage mit einer Mehrzahl von Elementen eines Mensch-Maschine-Interface (MMI) gemäß einer zweiten Ausführungsform beschrieben. Die vorgenannten Prinzipien für das Verfahren des Verbindens von Datenstrukturen und Elementen des MMI betreffend die erste Ausführungsform gelten sinngemäß für das Verfahren mit der Anordnung der Elemente des MMI in der Liste gemäß der zweiten Ausführungsform, so dass hier nur auf Unterschiede eingegangen wird.

In Schritt S200 beginnt das Verfahren.

In Schritt S220 werden die Elemente 12 des MMI in einer Liste 20 angeordnet. Die Liste 20 ist hier beispielsweise als verkettete Liste implementiert, bei der Listenelemente jeweils auf nachfolgenden Listenelement zeigen.

In Schritt S230 werden die Elemente 12 des MMI in der Liste 20 sortiert. Dazu wird wenigstens ein Sortierkriterium ausgewählt und die Elemente 12 des MMI in der Liste 20 werden gemäß des wenigstens einen Sortierkriteriums automatisch sortiert. Das Sortieren der Elemente 12 des MMI in der Liste 20 wird unter Verwendung aller ausgewählten Sortierkriterien durchgeführt, wobei die Sortierkriterien entsprechend ihrer Auswahl nacheinander angewendet werden.

In Schritt S235 wird die Gesamtheit von verfügbaren Datenstrukturen 18 der Datenverarbeitungsanlage in einem Datenstrukturanzeigeelement 24 in dem Browserfenster 10 ausgegeben.

In Schritt S240 erfolgt eine Auswahl einer Datenstruktur 18 in dem Datenstrukturanzeigeelement 24 durch einen Nutzer. Dazu wird das Auswahlmittel 14 durch eine Fingerbewegung auf dem Touchscreen auf die auszuwählende Datenstruktur 18 bewegt, beispielsweise durch drücken auf die auszuwählende Datenstruktur 18 oder durch ziehen des Auswahlmittels 14 zu der auszuwählenden Datenstruktur 18. Dabei wird die Ausgabeeinheit 16 mit dem graphischen Auswahlmittel 14 bewegt. In der Ausgabeeinheit 16 und dem Ausgabeelement 22 werden dabei jeweils die ersten Elemente 12 des MMI in der Liste 20 dargestellt, d.h. das Element 12 des MMI, auf die der Listenanfang gesetzt ist, sowie nachfolgende Elemente 12 des MMI.

Die Auswahl der Datenstruktur 18 wird von dem Nutzer durch eine Aktion aktiv bestätigt, indem über den Touchscreen eine Bestätigung erfolgt, beispielsweise durch ein erneutes Drücken auf die auszuwählende Datenstruktur 18.

In Schritt S250 erfolgt ein automatisches Verbinden des ersten Elements 12 des MMI aus der Liste 20 mit der ausgewählten Datenstruktur 18.

In Schritt S260 wird der Listenanfang auf das Element 12 des MMI gesetzt, das in der Liste 20 dem zuvor verbundenen Element 12 des MMI folgt. Entsprechend wird die Ausgabe in der Ausgabeeinheit 16 und dem Ausgabeelement 22 aktualisiert. Dabei wird das zuvor verbundene Element 12 des MMI aus der Liste 20 entfernt. Alternativ wird lediglich das Anzeigen des entfernten Elements 12 des MMI unterdrückt.

Soweit noch Datenstrukturen 18 und Elemente 12 des MMI verfügbar sind, wird das Verfahren mit Schritt S240 fortgesetzt.

In Schritt S270 wird das Verfahren beim Erreichen des Endes der Liste 20 der Elemente 12 des MMI oder sobald jede Datenstruktur 18 mit einem Element 12 des MMI verbunden ist beendet.

Das Verfahren ist als Computerprogrammprodukt mit Computer-implementierten Anweisungen implementiert, das nach dem Laden und Ausführen in der Datenverarbeitungsanlage die Schritte des obigen Verfahrens ausführt.

Ein digitales Speichermedium stellt elektronisch auslesbare Steuersignale bereit, die so mit der Datenverarbeitungsanlage zusammenwirken, dass das obige Verfahren auf der Datenverarbeitungsanlage ausgeführt wird.

**Bezugszeichenliste**

| | |
|---|---|
| Browserfenster | 10 |
| Elemente des MMI | 12 |
| graphisches Auswahlmittel, Zeiger | 14 |
| Ausgabeeinheit | 16 |
| Datenstruktur | 18 |
| Liste | 20 |
| Ausgabeelement | 22 |
| Datenstrukturanzeigeelement | 24 |

## Patentansprüche

1. Verfahren zum Verbinden von einer Mehrzahl von Datenstrukturen (18) einer Datenverarbeitungsanlage mit einer Mehrzahl von Elementen (12) eines Mensch-Maschine-Interface (MMI), wobei die Datenstrukturen (18) Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, umfassend die Schritte:
Bereitstellen eines MMI mit einer Mehrzahl von Elementen (12),
Anordnen der Mehrzahl von Datenstrukturen (18) in einer Liste (20), wobei die Liste (20) als verkettete Liste oder als Queue ausgeführt ist,
Auswahl eines Elements (12) des MMI durch einen Nutzer,
Automatisches Verbinden einer ersten Datenstruktur (18) aus der Liste (20) mit dem ausgewählten Element (12) des MMI, und
Setzen des Listenanfangs auf die Datenstruktur (18), die in der Liste (20) der zuvor verbundenen Datenstruktur (18) folgt, wobei
die Schritte der Auswahl eines Elements (12) des MMI durch einen Nutzer, des automatischen Verbindens einer ersten Datenstruktur (18) aus der Liste (20) mit dem ausgewählten Element (12) des MMI, des Setzens des Listenanfangs auf die Datenstruktur (18), die in der Liste (20) der zuvor verbundenen Datenstruktur (18) folgt, in dieser Reihenfolge wiederholt durchgeführt werden.

2. Verfahren nach Anspruch 1, **dadurch gekennzeichnet, dass**
das Verfahren den zusätzlichen Schritt des Beendens des Verfahrens beim Erreichen des Endes der Liste (20) der Datenstrukturen (18) oder sobald jedem Element (12) des MMI eine Datenstruktur (18) zugewiesen ist umfasst.

3. Verfahren nach einem der Ansprüche 1 oder 2, **dadurch gekennzeichnet, dass**
der Schritt des Setzens des Listenanfangs auf die Datenstruktur (18), die in der Liste (20) der zuvor verbundenen Datenstruktur (18) folgt, das Entfernen der zuvor verbundenen Datenstruktur (18) aus der Liste (20) beinhaltet.

4. Verfahren nach einem der vorhergehenden Ansprüche, **dadurch gekennzeichnet, dass**
das MMI ein Ausgabeelement (22) zur Darstellung wenigstens einer Datenstruktur (18) umfasst, und das Verfahren den zusätzlichen Schritt des Darstellens wenigstens der Datenstruktur (18), auf die der Listenanfang gesetzt ist, in dem Ausgabeelement (22) umfasst.

5. Verfahren nach einem der vorhergehenden Ansprüche, **dadurch gekennzeichnet, dass**
das MMI ein graphisches Auswahlmittel (14), insbesondere einen Zeiger, aufweist, welches zwischen den Elementen (12) des MMI beweglich ist, und
die Auswahl eines Elements (12) des MMI durch einen Nutzer das Bewegen des Auswahlmittels (14) zu dem auszuwählenden Element (12) des MMI und das Bestätigen der Auswahl umfasst.

6. Verfahren nach Anspruch 5, **dadurch gekennzeichnet, dass**
das MMI eine dem graphischen Auswahlmittel (14) zugeordnete Ausgabeeinheit (16) zur Darstellung wenigstens einer Datenstruktur (18) umfasst, wobei die Ausgabeeinheit (16) mit dem graphischen Auswahlmittel (14) beweglich ist, und
das Verfahren den zusätzlichen Schritt des Darstellens wenigstens der Datenstruktur (18), auf die der Listenanfang gesetzt ist, in der Ausgabeeinheit (16) umfasst.

7. Verfahren nach einem der vorhergehenden Ansprüche, **dadurch gekennzeichnet, dass**
der Schritt des Anordnens der Mehrzahl von Datenstrukturen (18) in einer Liste (20) das Sortieren von Datenstrukturen (18) in der Liste (20) umfasst.

8. Verfahren nach Anspruch 7, **dadurch gekennzeichnet, dass**
der Schritt des Sortierens von Datenstrukturen (18) in der Liste (20) das Bestimmen von wenigstens einem Sortierkriterium zum Sortieren der Datenstrukturen (18) in der Liste (20) und das automatische Sortieren der Datenstrukturen (18) in der Liste (20) gemäß des wenigstens einen Sortierkriteriums umfasst.

9. Verfahren nach einem der vorhergehenden Ansprüche, **dadurch gekennzeichnet, dass**
das Verfahren den zusätzlichen Schritt des Auswählens der Mehrzahl von Datenstrukturen (18) der Datenverarbeitungsanlage aus einer Gesamtheit von verfügbaren Datenstrukturen (18) der Datenverarbeitungsanlage umfasst.

10. Verfahren nach Anspruch 9, **dadurch gekennzeichnet, dass**
der Schritt des Auswählens der Mehrzahl von Datenstrukturen (18) der Datenverarbeitungsanlage aus einer Gesamtheit von verfügbaren Datenstrukturen (18) das Bestimmen von wenigstens einem Filterkriterium zum Auswählen der Mehrzahl von Datenstrukturen (18) und das automatische Auswählen der Mehrzahl von Datenstrukturen (18) aus der Gesamtheit von verfügbaren Datenstrukturen (18) gemäß des wenigstens einen Filterkriteriums umfasst.

11. Verfahren nach einem der vorhergehenden Ansprüche, **dadurch gekennzeichnet, dass**
das Verfahren den zusätzlichen Schritt des Ausgebens eines Inhaltes einer Datenstruktur (18) in dem verbundenen Element (12) des MMI umfasst.

12. Verfahren zum Verbinden von einer Mehrzahl von Datenstrukturen (18) einer Datenverarbeitungsanlage mit einer Mehrzahl von Elementen (12) eines Mensch-Maschine-Interface (MMI), wobei die Datenstrukturen (18) Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, umfassend die Schritte:
Bereitstellen eines MMI mit einer Mehrzahl von Elementen (12),
Anordnen der Mehrzahl von Elementen (12) in einer Liste (20), wobei die Liste (20) als verkettete Liste oder als Queue ausgeführt ist,
Bereitstellen eines Datenstrukturanzeigeelements (24) in dem MMI zur Darstellung wenigstens einer Teilmenge der Mehrzahl von Datenstrukturen (18),
Auswahl einer Datenstruktur (18) in dem Datenstrukturanzeigeelement (24) durch einen Nutzer,
automatisches Verbinden eines ersten Elements (12) aus der Liste (20) mit der ausgewählten Datenstruktur (12), und
Setzen des Listenanfangs auf das Element (12) des MMI, das in der Liste (20) dem zuvor verbundenen Element (12) folgt, wobei
die Schritte der Auswahl einer Datenstruktur (18) in dem Datenstrukturanzeigeelement (24) durch einen Nutzer, des automatischen Verbindens eines ersten Elements (12) aus der Liste (20) mit der ausgewählten Datenstruktur (18), und des Setzens des Listenanfangs auf das Element (12) des MMI, das in der Liste (20) dem zuvor verbundenen Element (12) folgt, in dieser Reihenfolge wiederholt durchgeführt werden.

13. Datenverarbeitungseinrichtung mit einem Mensch-Maschine-Interface (MMI) mit einer Mehrzahl von Elementen (12) und einer Mehrzahl von Datenstrukturen (18), wobei die Datenstrukturen (18) Komponenten eines realen oder virtuellen Steuer-, Regel- oder mechatronischen Systems oder Verknüpfungen zu Komponenten eines realen oder virtuellen Steuer-, Regel- oder mechatronischen Systems darstellen, zur Durchführung des Verfahrens nach einem der vorhergehden Ansprüche.

14. Datenverarbeitungseinrichtung nach Anspruch 13, **dadurch gekennzeichnet, dass**
das MMI einen Touchscreen zur Darstellung und Auswahl der Elemente (12) des MMI aufweist.

15. Computerprogrammprodukt mit Computer-implementierten Anweisungen, das nach dem Laden und Ausführen in einer geeigneten Datenverarbeitungseinrichtung die Schritte des Verfahrens nach einem der Ansprüche 1 bis 13 ausführt.

16. Digitales Speichermedium mit elektronisch auslesbaren Steuersignalen, die so mit einer programmierbaren Datenverarbeitungseinrichtung zusammenwirken können, dass das Verfahren nach einem der Ansprüche 1 bis 13 auf der Datenverarbeitungseinrichtung ausgeführt wird.

## Claims

1. A method for connecting a plurality of data structures (18) of a data processing system to a plurality of elements (12) of a man-machine interface (MMI), the data structures (18) representing components of a real or virtual control, servo, or mechatronic system or links to components of a real or virtual control, servo, or mechatronic system, comprising the steps:
providing an MMI having a plurality of elements (12),
arranging the plurality of data structures (18) in a list (20), the list (20) being implemented as a linked list or queue,
selecting an element (12) of the MMI by a user,
automatically connecting a first data structure (18) from the list (20) to the selected element (12) of the MMI, and
setting the beginning of the list to the data structure (18) following the previously connected data structure (18) in the list (20), wherein
the steps of selecting an element (12) of the MMI by a user, of automatically connecting a first data structure (18) from the list (20) to the selected element (12) of the MMI, of setting the beginning of the list to the data structure (18) following the previously connected data structure (18) in the list (20), are performed repeatedly in the given sequence.

2. The method according to claim 1, **characterized in that**
the method comprises the additional step of terminating the method when the end of the list (20) of data structures (18) is reached, or as soon as each element (12) of the MMI has had a data structure (18) assigned.

3. The method according to any one of the claims 1 or 2, **characterized in that**
the step of setting the beginning of the list to the data structure (18) following the previously connected data structure (18) in the list (20) comprises removing the previously connected data structure (18) from the list (20).

4. The method according to any one of the preceding claims, **characterized in that**
the MMI comprises an output element (22) for representing at least one data structure (18) and the method comprises the additional step of representing in the output element (22) at least the data structure (18) at which the beginning of the list is set.

5. The method according to any one of the preceding claims, **characterized in that**
the MMI comprises a graphic selecting means (14), particularly a pointer, displaceable between the elements (12) of the MMI, and
selecting an element (12) of the MMI by a user comprises displacing the selecting means (14) to the element (12) of the MMI to be selected and confirming the selection.

6. The method according to claim 5, **characterized in that**
the MMI comprises an output unit (16) associated with the graphic selection means (14) for displaying at least one data structure (18), wherein the output unit (16) having the graphic selection means (14) is displaceable, and
the method comprises the additional step of displaying in the output list (16) at least the data structure (18) at which the beginning of the list is set.

7. The method according to any one of the preceding claims, **characterized in that**
the step of arranging the plurality of data structures (18) in a list (20) comprises sorting data structure (18) in the list (20).

8. The method according to claim 7, **characterized in that**
the step of sorting data structures (18) in the list (20) comprises determining at least one sorting criterion for sorting the data structures (18) in the list (20) and automatically sorting the data structures (18) in the list (20) according to the at least one sorting criterion.

9. The method according to any one of the preceding claims, **characterized in that**
the method comprises the additional step of selecting the plurality of data structures (18) of the data processing system from an overall set of available data structures (18) in the data processing system.

10. The method according to claim 9, **characterized in that**
the step of selecting the plurality of data structures (18) of the data processing system from an overall set of available data structures (18) comprises determining at least one filter criterion for selecting the plurality of data structures (18) and automatically selecting the plurality of data structures (18) from the overall set of available data structures (18) according to the at least one filter criterion.

11. The method according to any one of the preceding claims, **characterized in that**
the method comprises the additional step of outputting a content of a data structure (18) in the connected element (12) of the MMI.

12. A method for connecting a plurality of data structures (18) of a data processing system to a plurality of elements (12) of a man-machine interface (MMI), the data structures (18) representing components of a real or virtual control, servo, or mechatronic system or links to components of a real or virtual control, servo, or mechatronic system, comprising the steps:
providing an MMI having a plurality of elements (12),
arranging the plurality of elements (12) in a list (20), the list (20) being implemented as a linked list or queue,
providing a data structure display element (24) in the MMI for displaying at least a subset of the plurality of data structures (18),
selecting a data structure (18) in the data structure display element (24) by a user,
automatically connecting a first element (12) from the list (20) to the selected data structure (12), and
setting the beginning of the list to the element (12) of the MMI following the previously connected element (12) in the list (20), wherein
the steps of selecting a data structure (18) in the data structure display element (24) by a user, of automatically connecting a first element (12) from the list (20) to the selected data structure (18), and of setting the beginning of the list to the element (12) of the MMI following the previously connected element (12) in the list (20) are performed repeatedly in the given sequence.

13. A data processing device having a man-machine interface (MMI) having a plurality of elements (12) and a plurality of data structures (18), wherein the data structures (18) represent components of a real or virtual control, servo, or mechatronic system, or links to components of a real or virtual control, servo, or mechatronic system for performing the method according to any one of the preceding claims.

14. A data processing device according to claim 13, **characterized in that**
the MMI has a touchscreen for displaying and selecting the elements (12) of the MMI.

15. A computer program product having computer-implemented instructions and executing the steps of the method according to any one of the claims 1 through 13 after loading and executing in a suitable data-processing device.

16. A digital storage medium having electronically readable control signals able to interact with a programmable data-processing device such that the method according to any one of the claims 1 through 13 is executed on the data-processing device.

## Revendications

1. Procédé pour connecter une multitude de structures de données (18) d'une installation de traitement de données à une multitude d'éléments (12) d'une interface homme-machine (IHM), dans lequel les structures de données (18) représentent des composants d'un système réel ou virtuel de commande, de régulation ou mécatronique ou des liaisons à des composants d'un système réel ou virtuel de commande, de régulation ou mécatronique, comprenant les étapes suivantes :
fournir une IHM avec une multitude d'éléments (12),
agencer la multitude de structures de données (18) dans une liste (20), sachant que la liste (20) étant exécutée en tant que liste concaténée ou en tant que file d'attente,
sélectionner un élément (12) de l'IHM par un utilisateur,
connecter automatiquement une première structure de données (18) de la liste (20) avec l'élément (12) sélectionné de l'IHM, et
définir le début de la liste sur la structure de données (18) qui suit la structure de données (18) précédemment connectée dans la liste (20), sachant que
les étapes consistant à sélectionner un élément (12) de l'IHM par un utilisateur, à connecter automatiquement une première structure de données (18) de la liste (20) à l'élément (12) sélectionné de l'IHM, à définir le début de la liste sur la structure de données (18) qui suit la structure de données (18) précédemment connectée dans la liste (20), sont effectuées de manière itérative dans cet ordre.

2. Procédé selon la revendication 1, **caractérisé en ce que**
le procédé comprend l'étape supplémentaire consistant à mettre fin au procédé à l'arrivée à la fin de la liste (20) des structures de données (18) ou dès qu'une structure de données (18) est affectée à chaque élément (12) de l'IHM.

3. Procédé selon l'une des revendications 1 ou 2, **caractérisé en ce que**
l'étape consistant à définir le début de la liste sur la structure de données (18) qui suit la structure de données (18) précédemment connectée dans la liste (20), comprend la suppression, depuis la liste (20), de la structure de données (18) précédemment connectée.

4. Procédé selon l'une des revendications précédentes, **caractérisé en ce que**
l' IHM comprend un élément de sortie (22) pour afficher au moins une structure de données (18), et le procédé comprend l'étape supplémentaire consistant à afficher, dans l'élément de sortie (22), au moins la structure de données (18) sur laquelle est placé le début de la liste.

5. Procédé selon l'une des revendications précédentes, **caractérisé en ce que**
l'IHM comprend un moyen de sélection graphique (14), en particulier un pointeur, qui est mobile entre les éléments (12) de l'IHM, et
la sélection d'un élément (12) de l'IHM par un utilisateur comprend le déplacement du moyen de sélection (14) sur l'élément (12) de l'IHM à sélectionner et la validation de la sélection.

6. Procédé selon la revendication 5, **caractérisé en ce que**
l'IHM comprend une unité de sortie (16) affectée au moyen de sélection graphique (14) pour afficher au moins une structure de données (18), sachant que l'unité de sortie (16) étant mobile avec le moyen de sélection graphique (14), et
le procédé comprenant l'étape supplémentaire consistant à afficher, dans l'unité de sortie (16), au moins la structure de données (18) sur laquelle le début de liste est défini.

7. Procédé selon l'une des revendications précédentes, **caractérisé en ce que**
l'étape consistant à agencer la multitude de structures de données (18) dans une liste (20) comprend le tri de structures de données (18) dans ladite liste (20).

8. Procédé selon la revendication 7, **caractérisé en ce que**
l'étape consistant à trier des structures de données (18) dans la liste (20) comprend la détermination d'au moins un critère de tri pour trier les structures de données (18) dans la liste (20) et le tri automatique des structures de données (18) dans la liste (20) selon le au moins un critère de tri.

9. Procédé selon l'une des revendications précédentes, **caractérisé en ce que**
le procédé comprend l'étape supplémentaire consistant à sélectionner la multitude de structures de données (18) de l'installation de traitement de données à partir d'un ensemble de structures de données (18) disponibles de l'installation de traitement de données.

10. Procédé selon la revendication 9, **caractérisé en ce que**
l'étape consistant à sélectionner la multitude de structures de données (18) de l'installation de traitement de données à partir d'un ensemble de structures de données (18) disponibles comprend la détermination d'au moins un critère de filtrage pour sélectionner la multitude de structures de données (18), et la sélection automatique de la multitude de structures de données (18) à partir de l'ensemble des structures de données (18) disponibles selon le au moins un critère de filtrage.

11. Procédé selon l'une des revendications précédentes, **caractérisé en ce que**
le procédé comprenant l'étape supplémentaire consistant à délivrer un contenu d'une structure de données (18) dans l'élément (12) connecté de l'IHM.

12. Procédé pour connecter une multitude de structures de données (18) d'une installation de traitement de données à une multitude d'éléments (12) d'une interface homme-machine (IHM), dans lequel les structures de données (18) représentent des composants d'un système réel ou virtuel de commande, de régulation ou mécatronique ou des liaisons à des composants d'un système réel ou virtuel de commande, de régulation ou mécatronique, comprenant les étapes suivantes :
fournir une IHM avec une multitude d'éléments (12),
agencer la multitude d'éléments (12) dans une liste (20), sachant que la liste (20) étant exécutée en tant que liste concaténée ou en tant que file d'attente,
fournir un élément d'affichage (24) de structures de données dans l' IHM pour afficher au moins un sous-ensemble de la multitude de structures de données (18),
sélectionner une structure de données (18) dans l'élément d'affichage (24) de structures de données par un utilisateur,
connecter automatiquement un premier élément (12) de la liste (20) avec la structure des données (12) sélectionnée, et
Définir le début de la liste sur l'élément (12) de l'IHM, qui suit l'élément (12) précédemment connecté dans la liste (20), sachant que
les étapes consistant à sélectionner une structure des données (18) dans l'élément d'affichage (24) de structures de données par un utilisateur, à connecter automatiquement un premier élément (12) de la liste (20) à la structure des données (18) sélectionnée, à à définir le début de la liste sur l'élément (12) de l'IHM qui suit l'élément (12) précédemment connecté dans la liste (20), sont effectuées de manière itérative dans cet ordre.

13. Installation de traitement de données avec une interface homme-machine (IHM) avec une multitude d'éléments (12) et une multitude de structures de données (18), dans laquelle les structures de données (18) représentant des composants d'un système réel ou virtuel de commande, de régulation ou mécatronique, ou des liens vers des composants d'un système réel ou virtuel de commande, de régulation ou mécatronique, pour l'exécution du procédé selon l'une des revendications précédentes.

14. Installation de traitement de données selon la revendication 13, **caractérisée en ce que**
l'IHM comporte un écran tactile pour l'affichage et la sélection des éléments (12) de l'IHM.

15. Produit de programme informatique avec des instructions implémentées sur ordinateur, qui, après le chargement et le lancement dans une installation de traitement de données appropriée, exécute les étapes du procédé selon l'une des revendications 1 à 13.

16. Support de stockage numérique avec des signaux de commande lisibles électroniquement, qui peuvent coopérer avec une installation de traitement de données programmable de sorte que le procédé selon l'une des revendications 1 à 13 soit exécuté sur l'installation de traitement de données.
